Europäisches Patentamt

European Patent Office

Office européen des brevets

(11) Veröffentlichungsnummer: **0 037 439**

**A1**

(12) # EUROPÄISCHE PATENTANMELDUNG

(21) Anmeldenummer: **80200306.1**

(22) Anmeldetag: **03.04.80**

(51) Int. Cl.³: **F 24 J 3/02**

(43) Veröffentlichungstag der Anmeldung:
**14.10.81 Patentblatt 81/41**

(84) Benannte Vertragsstaaten:
**AT BE CH DE FR GB IT LI LU NL SE**

(71) Anmelder: **BBC Brown, Boveri & Cie.
(Aktiengesellschaft)**

**CH-5401 Baden(CH)**

(72) Erfinder: **Yanni, Georges, Dipl.-Ing.
Zentralstrasse 90
CH-5430 Wettingen AG(CH)**

(54) **Verfahren zum Wärmeaustausch zwischen Kreislaufmedien von Sonnenenergieanlagen.**

(57) Verfahren zur Umgehung des "Pinch-Point"-Problems oder anders gesagt zur Minimalisierung der bei der Austauschung der Wärme zwischen Kreislaufmedien bei Sonnenenergieanlagen des Typs Farm-Konzept (Distributed Collector System) entstehenden exergetischen Verluste (6). Der Primärkreislauffluss (1), der die in den Sonnenkollektoren aufgefangene Wärme aufnimmt, wird in mehreren Teilkreisläufen (1a, 1b, 1c) verschiedener Massenströme und Drücke aufgeteilt, entsprechend der Anzahl der für Erhöhung des energetischen Niveaus des Sekundärkreislaufmediums festgelegten Wärmeaustauschphasen (3, 4, 5). Durch die nun möglich gewordene Zuordnung einer minimalen Grädigkeit (15a, 16, 17a, 17b, 18a) zwischen Primär- und Sekundärkreislaufmedien bei jedem der Teilkreisläufe (1a, 1b, 1c) wird die der exergetischen Verluste proportionale Fläche (6a) zu einem Minimum reduziert. Die einzelnen Primärmedien erfahren dabei während des Prozesses keine Aggregatzustandsänderung.

./...

Croydon Printing Company Ltd.

FIG.2

- 1 -

Sonnenenergieanlage des Typs "Farm-Konzept" (Distributed Collector System)

Die Erfindung betrifft ein Verfahren bei der Austauschung der Wärme zwischen Kreislaufmedien bei Sonnenenergieanlagen gemäss dem Oberbegriff des Patentanspruchs.

Sonnenenergieanlagen des Typs Farm-Konzept sind dadurch charakterisiert, dass ein Primärkreislaufmedium, dessen Aggregatzustand keine Aenderung erfährt, in einem geschlossenen Kreislauf die in Sonnenkollektoren abgefangene Wärme aufnimmt, wobei dieselbe anhand eines in einem Wärmetauscher stattfindenden Wärmeaustauschprozesses einem Sekundärkreislauffluid abgegeben wird.

Das Energieniveau des Sekundärkreislauffluides wird durch Wärmeaustauschung stufenweise, durch den Durchlauf einer Vorerwärmungs-, Verdampfungs- und eventuell Ueberhitzungsphase erhöht, so dass der damit erzeugte Dampf direkt oder indirekt zur Erzeugung von Energie (Kraftwerke; Wärmepumpen, Absorptions-Kühlmaschinen usw.) oder als Prozessdampf benutzt werden kann.

Das der Erfindung zugrundeliegende Problem betrifft die minimale Grädigkeit (Grädigkeit = Temperaturunterschied) zwischen den beiden Kreislaufmedien während des wärmeaustauschenden Prozesses, auch bekannt unter dem Fachausdruck "Pinch-Point"-Problem.

Aus den Wärmeübergangsgesetzen geht hervor, dass die Temperatur des Primärkreislaufmediums stets höher als jene des Sekundärkreislauffluides sein muss.

Die durch die Abgabe der Wärme bedingte Abkühlung des Primärkreislaufmediums weist einen quasi-linearen Temperatur-Wärmefluss-Verlauf auf; demgegenüber läuft die der Vorerwärmungsphase folgende Verdampfung des Sekundärfluides bei quasikonstanter Temperatur ab, d.h. der Verlauf der Kurve des Sekundärkreislauffluides im Temperatur-Wärmefluss-Diagramm weist gegenüber demjenigen, der den Verlauf des Primärkreislaufmediums darstellt, sowohl beim Uebergang aus der quasilinearverlaufenden Vorerwärmungsphase zur Verdampfungsphase, als auch beim Uebergang der letzteren zur quasi-linearverlaufenden Ueberhitzungsphase, sofern diese anschliesst, Knickpunkte auf, welche bewirken, dass die zu den exergetischen Verlusten proportionelle Fläche, gegeben durch den Zwischenraum zwischen der Kurve des Primärmediums und Sekundärfluides und geprägt durch die minimale Grädigkeit im "Pinch-Point", Ende Vorerwärmung resp. anfangs Verdampfung, grösser wird.

Es folgt daraus, dass die Verringerung der exergetischen Verluste, welche unmittelbar einen Einfluss auf den Wirkungsgrad der Sonnenenergieanlagen haben, durch die Zuordnung einer minimalen noch vertretbaren Grädigkeit zwischen Primärmedium und Sekundärfluid im "Pinch-Point" erzielt werden kann, wobei dieseGrädigkeit die Verringerung der

- 3 -

exergetischen Verluste unmittelbar begrenzt.

Eine bisherige Lösung zur Verringerung der exergetischen Verluste bei der Wärmeaustauschung geht von bekannten Tatsachen aus, nämlich dass mit steigendem Druck die Verdampfungswärme eines Fluides abnimmt bis zum Grenzfall einer Verdampfung von Null bei kritischem Druck. Dadurch umgeht man zwar die jeweilige durch den "Pinch-Point" bedingte Begrenzung, indessen weist diese Lösung aber folgende Nachteile auf:

a) Weil der zur Erzielung des Zweckes erforderliche Druck sehr hoch angesetzt werden muss, ist der zu diesem Zweck eingesetzte Dampferzeuger durch eine spezielle und komplizierte Konstruktion gekennzeichnet.

b) Muss das Sekundärfluid am Austritt aus der Wärmeaustauschung als Dampf mit einer vorgegebenen Temperatur vorliegen, so ist die obere Grenze der Wirksamkeit dieser Lösung bei dem dieser vorgegebenen Temperatur entsprechenden Sättigungsdruck erreicht.

Eine weitere bisherige Lösung fusst bei der Wärmeaustauschung auf die Zuhilfenahme von Zwei- oder Mehrdrucksystemen hinsichtlich Sekundärkreislauffluides, analog der bei kombinierten Gas-/Dampfturbinen-Anlagen angewendeten Technik. Diese Lösung weist aber folgende Nachteile auf:

a) Die Schaltungen des Sekundärkreislauffluides gestalten sich, technisch betrachtet, als sehr aufwendig; wenn noch eine hierzu bedingte Expansionsmaschine hinzu kommt, so stehen die Investitionskosten, insbesondere wenn es sich um Sonnenkraftanlagen kleinerer Leistung handelt, in keiner Relation zur damit erzielbaren Wirkungsgradverbesserungen.

b) Diese Lösung ist nicht anwendbar, wenn das Sekundärfluid als Prozessdampf, der eine vorgegebene einzige Temperatur aufweisen muss, benutzt wird.

Eine weitere bisherige Lösung geht von der Ueberlegung aus, ein geeignetes Sekundärkreislauffluid zu wählen, das bei gegebenem Druck eine kleine Verdampfungswärme besitzt, damit dadurch die exergetischen Verluste des Dampferzeugers reduziert werden können. Diese Lösung weist aber folgende Nachteile auf.

a) Nur wenige Fluide weisen eine kleine Verdampfungswärme auf. Ihre Einsetzung scheitert überdies daran, dass sie einerseits zu teuer sind und andererseits, dass sie aus Sicherheitsgründen (Giftigkeit, Brennbarkeit) oder aus Gründen ihrer Beständigkeit nicht herangezogen werden können.

b) Ueberdies ist diese Lösung nicht anwendbar bei Sonnenenergieanlagen, deren Sekundärfluid durch andere Kriterien (Hygiene, Chemie usw.) bestimmt ist, so z.B. Wasserdampf in Nahrungsmittelindustrie, Pharmaindustrie etc.

Es ist Aufgabe der Erfindung ein Verfahren vorzuschlagen, welches die Nachteile der obenbeschriebenen Lösungen beseitigt.

- 5 -

Diese Aufgabe wird erfindungsgemäss durch die im Kennzeichen des Patentanspruchs genannten Merkmale gelöst.

Die mit der Erfindung erzielbaren Vorteile bestehen insbesondere darin, dass die aus der Wärmeaustauschung zwischen Kreislaufmedien entstehenden exergetischen Verluste niedrig gehalten werden, was daraus eine Verbesserung des Gesamtwirkungsgrades der Anlage resultiert.

Durch die Zuordnung einer minimalen Grädigkeit zwischen den Kreislaufmedien eines jeden Teilkreislaufes wird die mittlere Temperatur der Primärmedien gesenkt und folglich der Wirkungsgrad der entsprechenden Sonnenkollektoren erheblich verbessert.

Im folgenden werden anhand der Zeichnung Ausführungsbeispiele der Erfindung näher erläutert. Alle für das Verständnis der Erfindung unwesentlichen Verfahrensschritte sind nicht dargestellt. Gleiche Abläufe sind in den Diagrammen mit gleichen Bezugsziffern versehen.

Es zeigt:

Fig. 1   Temperatur-Wärmefluss-Diagramm nach Stand der Technik,

Fig. 2   Temperatur-Wärmefluss-Diagramm der erfindungsgemässen Wärmeaustauschung,

Fig. 3   Temperatur-Wärmefluss-Diagramm der erfindungsgemässen Wärmeaustauschung, soweit die übertragene Wärme vorwiegend aus Vorerwärmungswärme besteht,

Fig. 4 Temperatur-Wärmefluss-Diagramm der erfindungsgemässen Wärmeaustauschung, soweit die übertragene
Wärme vorwiegend aus Verdampfungs- und Ueberhizzungswärme besteht,

Fig. 5 Temperatur-Wärmefluss-Diagramm der erfinfungsgemässen Wärmeaustauschung mit nicht ineinandergreifenden Uebergängen.

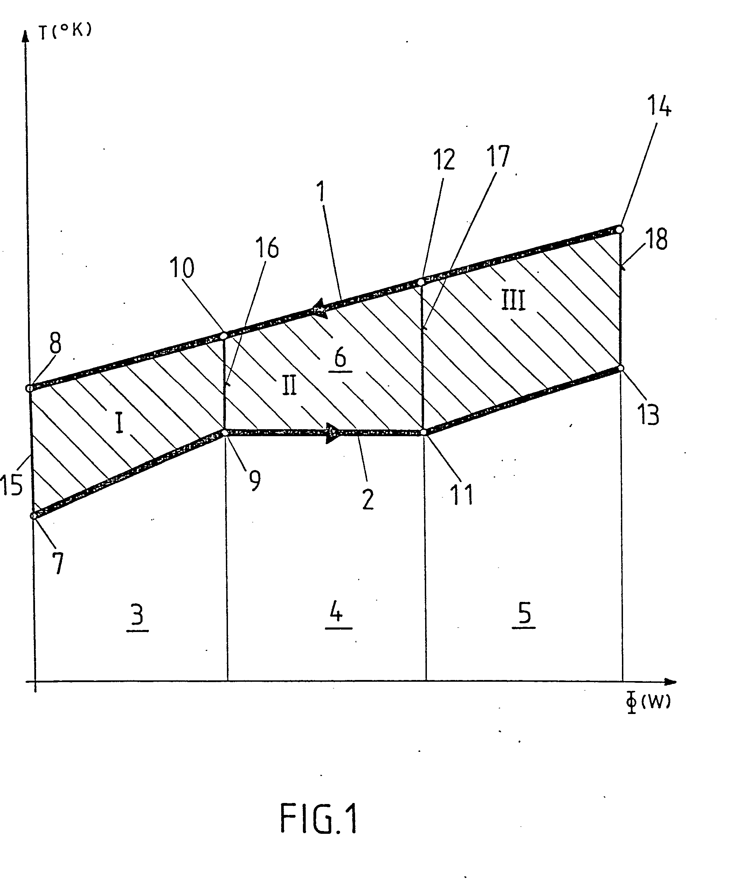

Fig. 1 zeigt den Verlauf einer Wärmeaustauschung zwischen
zwei Kreislaufmedien, entsprechend dem Stand der Technik.

Die Fläche 6, welche proportional zu den exergetischen Verlusten aus der Wärmeaustauschung ist, ist im wesentlichen
durch die noch zulässige minimale Grädigkeit 16, vorherrschend am Ende der Vorerwärmungsphase 3 resp. anfangs Verdampfungsphase 4 und gegeben durch die hiesige Differenz
zwischen Temperaturwert 10 des Primärkreislaufmediums 1
und Temperaturwert 9 des Sekundärkreislauffluids 2, bestimmt.

Zur Festlegung der kleinsten Fläche 6 übernimmt der Temperaturwert 10, hinsichtlich Verlaufes des Primärkreislaufmediums 1 gegenüber dem Sekundärkreislauffluid 2, die Funktion eines "Drehpunktes".

Durch Verminderung der Grädigkeit 18, gegeben durch die
Differenz zwischen  Temperaturwert 14 und 13 am Ende der
Ueberhitzungsphase 5, oder der Grädigkeit 17, gegeben
durch die Differenz zwischen  Temperaturwert 12 und 11 am Ende der Verdampfungsphase 4 resp anfangs Ueberhitzungsphase 5, verkleinern sich die der Verdampfungs- und Ueberhitzungsphase zugehörenden Teilflächen II, III; demgegenüber vergrössert sich aber auf der anderen Seite die Grädigkeit 15, gegeben durch die Differenz zwischen Temperaturwert 8 und 7 anfangs Vorerwärmungsphase 3, und entsprechend,

- 8 -

auch die zugehörige Teilfläche I. Bei diesem Optimierungsprozess müssen einerseits die nicht unterschreitbaren Grenzen der Grädigkeiten 15, 17 und 18 beachtet werden und andererseits die prozentualen Anteile der Vorerwärmungsphase 3, Verdampfungsphase 4 und Ueberhitzungsphase 5 am ganzen Wärmeaustauschprozess berücksichtigt werden.

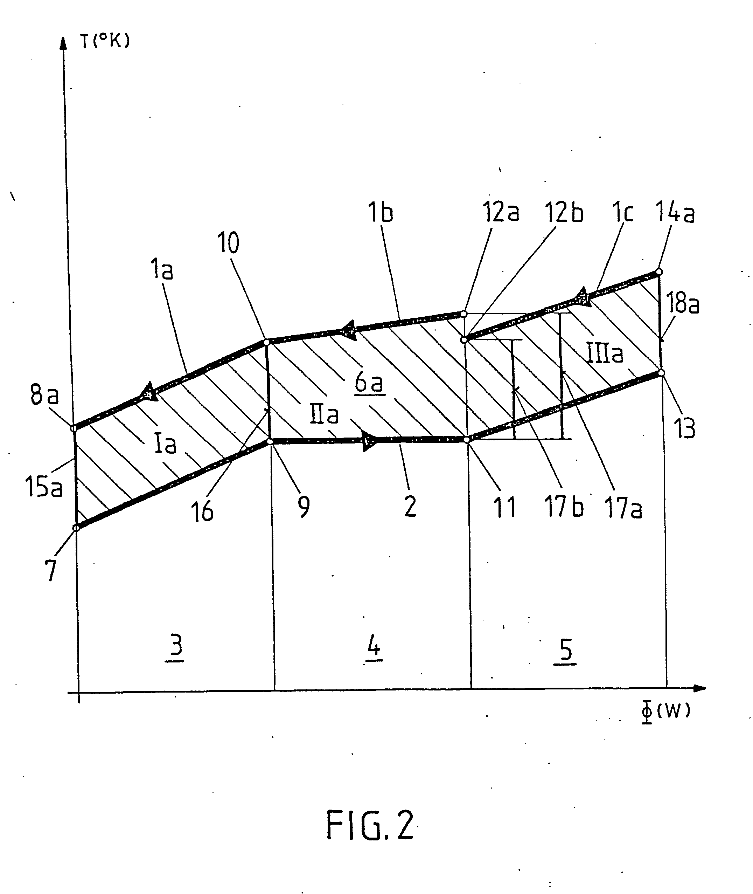

Ganz anders verhält es sich mit der erfindungsgemässen Wärmeaustauschung, wie sie aus der Darstellung des Diagrammes aus Fig. 2 hervorgeht.

Wie daraus ersichtlich ist, entspricht der Verlauf der Wärmeaufnahme des Sekundärkreislauffluides 2 demjenigen aus Fig. 1.

Hingegen wird der Kreislauffluss des Primärmediums 1 in drei unabhängige in sich geschlossene Teilkreisläufe 1a, 1b und 1c aufgeteilt. Jedem dieser Teilkreisläufe wird eine Sonnenkollektorgruppe zugeordnet, die für die zu erfüllende Aufgabe nun auch individuell ausgelegt werden kann. Des weiteren weisen die Teilkreisläufe des Primärmediums verschiedene Massenströme und, falls es sich um ein flüssiges Primärmedium handelt, auch verschiedene Drücke auf, so dass für jede Phase der Wärmeaustauschung, die für die Primärmedien ohne Aggregatzustandsänderung abläuft, die Zuordnung einer minimalen Grädigkeit ermöglicht wird.

Die Reduzierung der exergetischen Verluste zu einem Wert wie die Fläche 6a, bestehend aus den Teilflächen Ia (Vorerwärmung), IIa (Verdampfung) und IIIa (Ueberhitzung), versinnbildlicht, hängt von der Erfüllung der obengenannten Massnahmen ab. Schon bei der Vorwärmungsphase 3 lassen sich
die exergetischen Verluste auf ein Minimum reduzieren, indem die Grädigkeit 15a, gegeben durch die Differenz zwischen dem herabgesetzten Temperaturwert 8a mit dem vorgegebenen 7, am Anfang dieser Phase, optimal festgelegt werden kann, ohne dabei die Grädigkeiten der nachfolgenden
Phasen zu beeinflussen.

Eine kräftige Reduzierung der exergetischen Verluste lässt
sich nun auch während der Verdampfungsphase 4 erzielen, indem die Grädigkeit 17a, gegeben durch die Differenz zwischen dem herabgesetzten Temperaturwert 12a und dem vorgegebenen 11, nur leicht höher als die Grädigkeit 16 angesetzt wird, und zwar nur so viel, dass der Massenstrom des
Primärmediums des Teilkreislaufes 1b endlich wird und folglich nicht zu grossen Druckverlusten hervorruft.

Und falls der Verdampfungsphase 4 eine Ueberhitzungsphase 5
folgt, lässt sich auch hier eine Reduktion der exergetischen
Verluste erzielen, indem die Grädigkeit 17b, gegeben durch
die Differenz zwischen dem herabgesetzten Temperaturwert 12b
und dem vorgegebenen 11, anfangs Ueberhitzungsphase 5 und
Grädigkeit 18a, gegeben durch die Differenz zwischen dem herabgesetzten Temperaturwert 14a und dem vorgegebenen 13, am
Ende der Ueberhitzungsphase 5, minimalisiert werden.

Geht man davon aus, dass die Grädigkeit 16 im "Pinch-Point"
technisch fixiert ist, so sind die anderen zu den verschiedenen Phasen des Wärmeaustauschprozesses zugehörenden Grädigkeiten 15a, 17a resp. 17b und 18a kleiner als die technisch-analogen 15, 17 und 18, die der verschiedenen Phasen der herkömmlichen Wärmeaustauschung von Fig. 1 zugeordnet sind.

Da die mittlere Temperatur der Primärkreislaufmedien, sei es aus den einzelnen Teilkreisläufen 1a, 1b, 1c oder gesamthaft ermittelt, tiefer liegt als diejenige des Primärkreislaufmediums 1 aus der herkömmlichen Wärmeaustauschung (Fig.1), erhöht sich dadurch der Wirkungsgrad der Sonnenkollektoren und kausal dazu jener der Gesamtanlage.

Weitere Vorteile der erfindungsgemässen Lösung, deren Massnahmen beispielsweise aus Fig. 2 hervorgehen, sind, hinsichtlich Anlageinvestitionen, wirtschaftlicher Natur.

Der bereits erwähnten und von den Sonnenkollektoren herrührenden Verbesserung des Wirkungsgrades gesellt sich das bei Verwendung von Flüssigkeiten als Primärkreislaufmedien nun niedrig vorherrschende Druckniveau in den einzelnen Primärteilkreisläufen 1a, 1b, 1c hinzu, sowie eine freiere Wahl sowohl der Primärmedien als auch des Sekundärfluids 2.

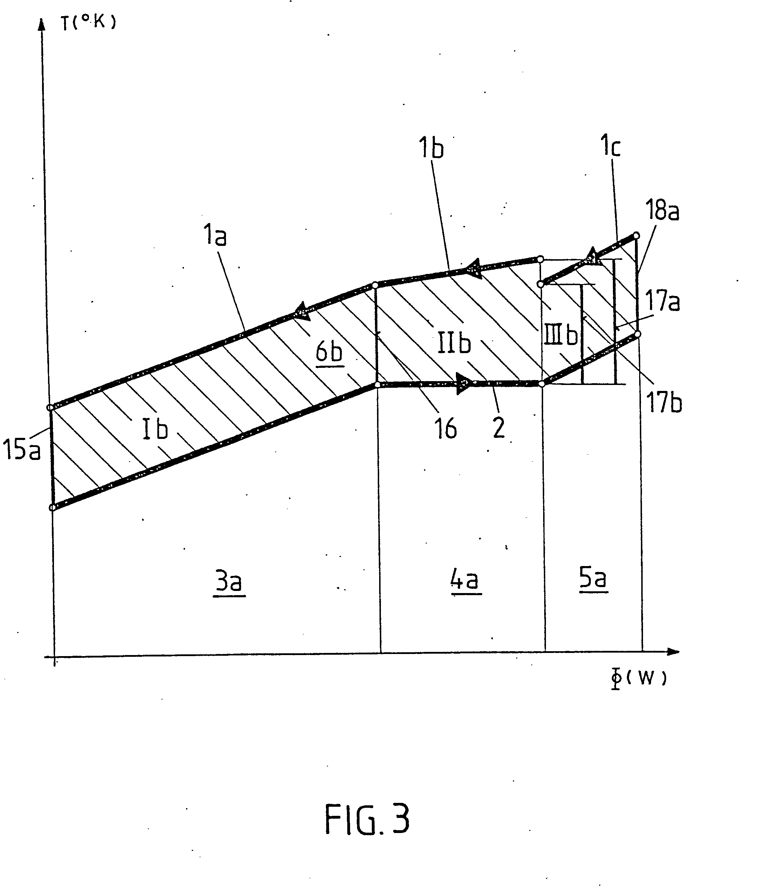

Aus Fig. 3 geht ein Beispiel hervor, wonach die übertragene Wärme vorwiegend aus Vorerwärmungswärme besteht. Demnach ist die Vorerwärmungsphase 3a im Verhältnis zu den nachfolgenden Verdampfungsphase 4a und Ueberhitzungsphase 5a stärker vertreten. Die Reduktion der der exergetischen Verluste versinnbildlichenden Fläche 6b, bestehend aus den Teilflächen Ib (Vorerwärmung), IIb (Verdampfung) und IIIb (Ueberhitzung) geht, gegenüber der herkömmlichen Wärmeaustauschung aus Fig. 1, im wesentlichen aus der Herabsetzung der ursprünglichen Grädigkeiten 17 und 18 zu 17a, 17b und 18a
hervor.

Mit dieser Lösung wird die Qualität des Dampferzeugers verbessert und da die Verdampfungs- und Ueberhitzungswärme bei niedriger mittlerer Temperatur der Primärmedien übertragen wird, erhöht sich der Wirkungsgrad der Sonnenkollektoren; oder bei gleichbleibendem Wirkungsgrad wird die Verwendung billigerer Sonnenkollektoren ermöglicht.

Da bei Verwendung von Flüssigkeiten als Primärkreislaufmedien die Umgehung deren Verdampfung anvisiert wird, bewirkt diese Temperaturreduktion ferner, dass der Druck der betroffenen Primärteilkreismedien niedriger gehalten werden kann.

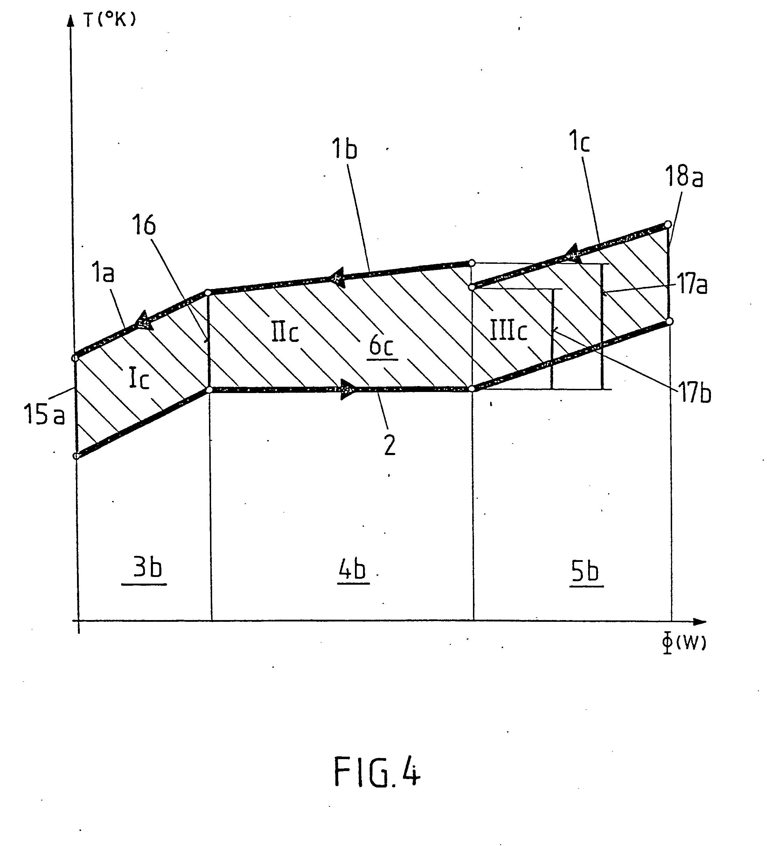

Wie aus Fig. 4 hervorgeht, besteht die übertragene Wärme vorwiegend aus Verdampfungs- und Ueberhitzungswärme. Demnach sind die Verdampfungsphase 4b und Ueberhitzungsphase 5b im Verhältnis zur vorangegangenen Vorerwärmungsphase 3b stärker vertreten. Die Reduktion der der exergetischen Verluste versinnbildlichenden Fläche 6c, bestehend aus den Teilflächen Ic (Vorerwärmung), IIc (Verdampfung) und IIIc (Ueberhitzung) geht, wie oben bereits erwähnt, im wesentlichen aus der Herabsetzung der ursprünglichen Grädigkeiten zu den reduzierten hervor. Die Vorteile dieser Lösung wurden bereits unter den Ausführungen von Fig. 3 kommentiert.

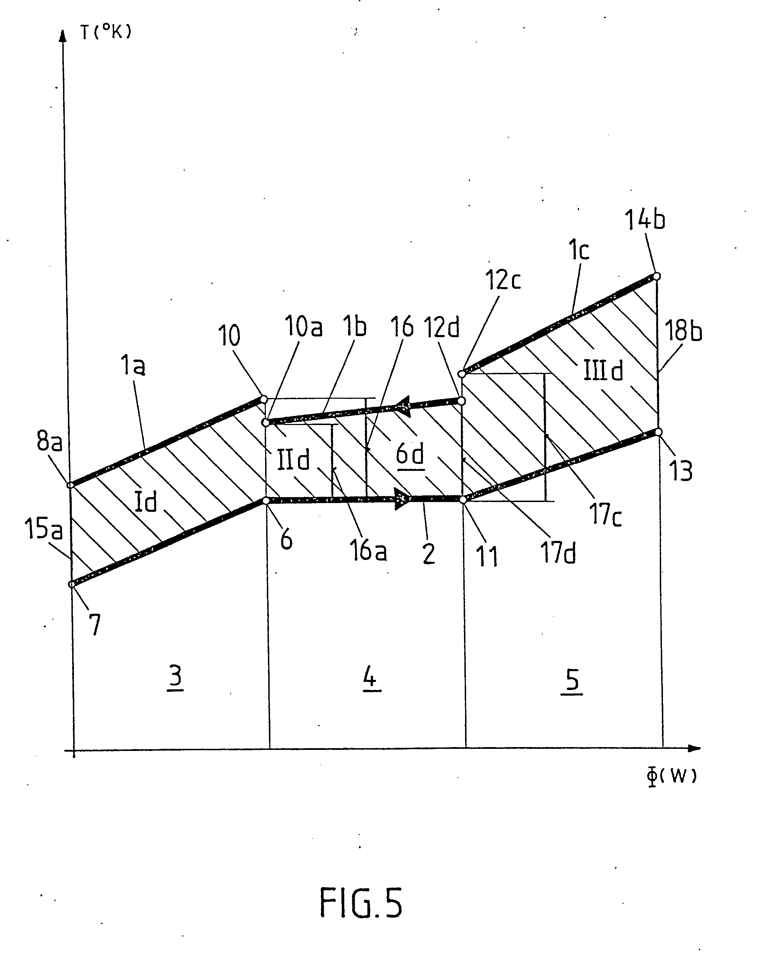

Wie in Fig. 5 dargestellt ist, sind die einzelnen Teilkreisläufe 1a, 1b und 1c des Primärkreislaufmediums in den Uebergängen in den einzelnen Phasen 3, 4 und 5 temperaturmässig nicht ineinandergreifend, wie das Beispiel aus Fig. 1 darstellt. Die der exergetischen Verluste versinnbildlichende Fläche 6d, bestehend aus den Teilflächen Id (Vorerwärmung), IId (Verdampfung) und IIId (Ueberhitzung), geht aus der Möglichkeit hervor, die einzelnen Grädigkeiten, insbesondere in den Uebergängen 16 und 16a resp 17c und 17d, einerseits zueinander und andererseits gegenüber 15a und 18b zu optimieren.

Selbstverständlich kann dabei die Temperatur 10a einen grösseren Wert als die benachbarte Temperatur 10 einnehmen, wobei dann die dazugehörenden Grädigkeiten 16a und 16 zueinander auch wechseln mit dem entsprechenden Einfluss auf die Temperatur 8a und auf die dazugehörende Grädigkeit 15a. Analog gilt dies für die beiden Temperaturen 12d und 12c zueinander, wobei je nach Festlegung, d.h. 17c grösser 17d oder umgekehrt, die Temperatur 14b und die dazugehörende Grädigkeit 18b unmittelbar beeinflusst werden.

- 13 -

0037439

B e z e i c h n u n g s l i s t e

| | |
|---|---|
| 1 | Primärkreislauf(medium) |
| 1a | Primärteilkreislauf(medium)  Vorerwärmung |
| 1b | Primärteilkreislauf(medium)  Verdampfung |
| 1c | Primärteilkreislauf(medium)  Ueberhitzung |
| 2 | Sekundärkreislauf(fluid) |
| 3 | Vorerwärmungsphase |
| 3a | Vorwiegende Vorerwärmungsphase |
| 3b | Reduzierte Vorerwärmungsphase |
| 4 | Verdampfungsphase |
| 4a | Reduzierte Verdampfungsphase |
| 4b | Vorwiegende Verdampfungsphase |
| 5 | Ueberhitzungsphase |
| 5a | Reduzierte Ueberhitzungsphase |
| 5b | Vorwiegende Ueberhitzungsphase |
| 6 | Zu den exergetischen Verlusten proportionale Fläche zu Fig. 1 |
| 6a | Zu den exergetischen Verlusten proportionale Fläche zu Fig. 2 |
| 6b | Zu den exergetischen Verlusten proportionale Fläche zu Fig. 3 |
| 6c | Zu den exergetischen Verlusten proportionale Fläche zu Fig. 4 |
| 6d | Zu den exergetischen Verlusten proportionale Fläche zu Fig. 5 |
| 7 | Temperaturwert Sekundärkreislauffluides |

0037439

- 14 -

| | |
|---|---|
| 8 | Temperaturwert Primärkreislaufmediums |
| 8a | Reduzierter Temperaturwert Primärkreislaufmediums zu Fig. 2 |
| 9 | Temperaturwert Sekundärkreislauffluides |
| 10 | Temperaturwert Primärkreislaufmediums |
| 10a | Reduzierter Temperaturwert Primärkreislaufmediums zu Fig. 5 |
| 11 | Temperaturwert Sekundärkreislauffluides |
| 12 | Temperaturwert Primärkreislaufmediums |
| 12a | Reduzierter Temperaturwert Primärkreislaufmediums zu Fig. 2 |
| 12b | Reduzierter Temperaturwert Primärkreislaufmediums zu Fig. 2 |
| 12c | Temperaturwert Primärkreislaufmediums zu Fig. 5 |
| 12d | Reduzierter Temperaturwert Primärkreislaufmediums zu Fig. 5 |
| 13 | Temperaturwert Sekundärkreislauffluides |
| 14 | Tempraturwert Primärkreislaufmediums |
| 14a | Reduzierter Temperaturwert Primärkreislaufmediums zu Fig. 2 |
| 14b | Temperaturwert Primärkreislaufmediums zu Fig. 5 |
| 15 | Grädigkeit zwischen 8 und 7 |
| 15a | Reduzierte Grädigkeit zwischen 8a und 7 |
| 16 | Grädigkeit zwischen 10 und 9 |
| 16a | Reduzierte Grädigkeit zwischen 10a und 9 |
| 17 | Grädigkeit zwischen 12 und 11 |
| 17a | Reduzierte Grädigkeit zwischen 12a und 11 |
| 17b | Reduzierte Grädigkeit zwischen 12b und 11 |
| 17c | Grädigkeit zwischen 12c und 11 |
| 17d | Reduzierte Grädigkeit zwischen 12d und 11 |
| 18 | Grädigkeit zwischen 14 und 13 |
| 18a | Reduzierte Grädigkeit zwischen 14a und 13 |

00347439

- 15 -

| | |
|---|---|
| 18b | Grädigkeit zwischen 14b und 13 |
| I | Teilfläche, proportional zu den exergetischen Verlusten der Vorerwärmungsphase 3 (Fig. 1) |
| Ia | Teilfläche, proportional zu den exergetischen Verlusten der Vorerwärmungsphase 3 (Fig. 2) |
| Ib | Teilfläche, proportional zu den exergetischen Verlusten der Vorerwärmungsphase 3a (Fig. 3) |
| Ic | Teilfläche, proportional zu den exergetischen Verlusten der Vorerwärmungsphase 3b (Fig. 4) |
| Id | Teilfläche, proportional zu den exergetischen Verlusten der Vorerwärmungsphase 3 (Fig. 5) |
| II | Teilfläche, proportional zu den exergetischen Verlusten der Verdampfungsphase 4 (Fig. 1) |
| IIa | Teilfläche, proportional zu den exergetischen Verlusten der Verdampfungsphase 4 (Fig. 2) |
| IIb | Teilfläche, proportional zu den exergetischen Verlusten der Verdampfungsphase 4a (Fig. 3) |
| IIc | Teilfläche, proportional zu den exergetischen Verlusten der Verdampfungsphase 4b (Fig. 4) |
| IId | Teilfläche, proportional zu den exergetischen Verlusten der Verdampfungsphase 4 (Fig. 5) |
| III | Teilfläche, proportional zu den exergetischen Verlusten der Ueberhitzungsphase 5 (Fig. 1) |
| IIIa | Teilfläche, proportional zu den exergetischen Verlusten der Ueberhitzungsphase 5 (Fig. 2) |

0037439

- 16 -

| IIIb | Teilfläche, proportional zu den exergetischen Verlusten der Ueberhitzungsphase 5a (Fig. 3) |
| IIIc | Teilfläche, proportional zu den exergetischen Verlusten der Ueberhitzungsphase 5b (Fig. 4) |
| IIId | Teilfläche, proportional zu den exergetischen Verlusten der Ueberhitzungsphase 5 (Fig. 5) |

——————————————

- 17 -

P a t e n t a n s p r u c h

Verfahren bei der Austauschung der Wärme zwischen Kreislaufmedien bei Sonnenenergieanlagen des Typs Farm-Konzept (Distributed Collector System), wobei ein Primärkreislaufmedium, das während des Prozesses keine Aggregatzustandsänderung erfährt, die im Sonnenkollektor abgefangene Wärme aufnimmt und sie einem Sekundärkreislaufmedium, dessen Aggregatzustand sich während des Prozesses ändert, abgibt, dadurch gekennzeichnet, dass die aus der Wärmeaustauschung zwischen Primärkreislaufmedium (1) und Sekundärkreislaufmedium (2) resultierenden exergetischen Verluste (6) durch Aufteilung des für die Aufnahme der in Sonnenkollektoren abgefangenen Wärme zuständigen Kreislaufflusses des Primärmediums (1) in mehreren Teilkreisläufen (1a, 1b, 1c) verschiedener Massenströme und Drücke entsprechend der Anzahl der für die Erhöhung des energetischen Niveaus des Sekundärkreislaufmediums (2) festgelegten Wärmeaustauschphasen (3, 4, 5), und durch Zuordnung einer minimalen Grädigkeit (15a, 16, 16a, 17b, 17d, 18a) zwischen Primär- und Sekundärkreislaufmedium bei Anfang und Ende des jeweiligen Teilkreislaufes (1a, 1b, 1c), minimalisiert werden.

FIG.1

0037439

FIG.2

FIG.3

FIG.4

FIG.5

**0037439**

Nummer der Anmeldung

**Europäisches Patentamt**

**EUROPÄISCHER RECHERCHENBERICHT**

EP 80 20 0306

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 757 631 (BADGER)<br><br>* das ganze Dokument * | 1 |
| | Wärme, Band 84, no. 1, März 1978, München-Graefelring (DE) HEINRICH NETZ "Energiegewinnung in Vergangenheit und Zukunft" Seiten 13-18<br><br>* Seite 17, rechte Spalte, Abbildung 14 * | 1 |
| E,X | FR - A - 2 450 363 (ANVAR)<br><br>* das ganze Dokument * | 1 |
| A | FR - A - 2 323 874 (U.S. ENERGY RESEARCH) | |
| A | DE - A - 2 831 017 (PATLICO) | |
| A | FR - A - 2 283 404 (BROWN, BOVERI) & DE - A - 2 441 151 | |
| A | FR - A - 2 347 631 (AGA) & DE - A - 2 715 504 | |
| A | DE - A - 2 814 243 (RESOL) | |
| A | GB - A - 1 509 040 (KUO) | |
| A | US - A - 4 117 682 (SMITH) | |

### KLASSIFIKATION DER ANMELDUNG (Int. Cl.³)

F 24 J 3/02

### RECHERCHIERTE SACHGEBIETE (Int. Cl.³)

F 24 J
F 03 G
F 25 B
F 22 B

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 8-06-1981 | SMETS |

EPA form 1503.1   06.78